# EUROPÄISCHE PATENTSCHRIFT

(11) **EP 2 511 436 B1**
(45) Veröffentlichungstag und Bekanntmachung des Hinweises auf die Patenterteilung: **21.08.2013**
(21) Anmeldenummer: 11162513.3
(22) Anmeldetag: 14.04.2011
(51) Int. Cl.: E03F 5/14, B01D 29/64

(54) **Vorrichtung zum Entfernen von Rechengut aus einer Flüssigkeit**
Device for removing screenings from a liquid
Dispositif de suppression de râtelures à partir d'un liquide

(43) Veröffentlichungstag der Anmeldung: 17.10.2012
(73) Patentinhaber: AAF Envirotec Gmbh, 45127 Essen (DE)
(72) Erfinder: Feierabend, Andreas, 45307, Essen (DE)
(74) Vertreter: Rohmann, Michael

(56) Entgegenhaltungen:
- DE-A1- 19 850 320
- US-A1- 2007 075 024
- US-B1- 6 177 020

## Beschreibung

Die Erfindung betrifft eine Vorrichtung zum Entfernen von Rechengut aus einer Flüssigkeit, insbesondere aus strömendem Abwasser, wobei ein zumindest teilweise in die Flüssigkeit eintauschender Stufenrechnen mit einer Mehrzahl von Stufen vorgesehen ist. - Rechengut meint im Rahmen der Erfindung insbesondere grobe Feststoffe, die aus der Flüssigkeit bzw. aus dem Abwasser entfernt werden. Die Erfindung bezieht sich vor allem auf die Reinigung von Abwässern von Kläranlagen. Andere Einsatzzwecke bzw. Einsatzorte der erfindungsgemäßen Vorrichtung sind aber ebenfalls denkbar.

Vorrichtungen der vorstehend beschriebenen Art sind aus der Praxis in verschiedenen Ausführungsformen bekannt, vgl z.B. US-A-6 177 020. Diese bekannten Vorrichtungen zeichnen sich oftmals durch Nachteile aus. Bei einigen Vorrichtungen lässt die Effizienz der Reinigung und/oder die Reinigungsgeschwindigkeit zu wünschen übrig. Viele bekannte Vorrichtungen sind auch störanfällig und somit ist die Funktionssicherheit der Reinigung bei diesen Vorrichtungen in Frage gestellt. Ein weiteres Problem besteht darin, dass einige bekannte Vorrichtungen eine aufwendige voluminöse und komplexe Bauweise aufweisen. Bei mehreren hintereinandergeschalteten bzw. miteinander kombinierten Reinigungseinrichtungen sind die Antriebsmaßnahmen für diese Reinigungseinrichtungen komplex und nur aufwendig zu steuern.

Demgegenüber liegt der Erfindung das technische Problem zugrunde, eine Vorrichtung der eingangs genannten Art anzugeben, mit der die vorstehend beschriebenen Nachteile möglichst vollständig vermieden werden.

Zur Lösung dieses technischen Problems lehrt die Erfindung eine Vorrichtung zum Entfernen von Rechengut aus einer Flüssigkeit, insbesondere aus strömendem Abwasser, wobei ein zumindest teilweise in die Flüssigkeit eintauchender Stufenrechen mit einer Mehrzahl von Stufen vorgesehen ist und wobei an den Stufenrechen eine Förderschnecke anschließt bzw. angeschlossen ist,

wobei das Rechengut mit dem Stufenrechen in Richtung Förderschnecke förderbar ist, von dem Stufenrechen an die Förderschnecke übergeben wird sowie mit der Förderschnecke abförderbar ist,

wobei die Förderschnecke mit einem Antriebsmotor rotierend antreibbar ist und wobei die Förderschnecke mit der Maßgabe an den Stufenrechen angeschlossen ist, dass mittels der Rotation der Förderschnecke und mit Hilfe einer Übertragungseinrichtung der Stufenrechen antreibbar ist.

Erfindungsgemäß wird also mit dem Antrieb der Förderschnecke auch der Stufenrechen angetrieben. Dabei werden bewegliche Rechenstäbe des Stufenrechens in Bewegung versetzt und aufgrund dieser Bewegung der beweglichen Rechenstäbe werden Feststoffe bzw. Feststoffteilchen von Stufe zu Stufe des Stufenrechens transportiert. Rechenstäbe meint im Rahmen der Erfindung im Übrigen auch mehr oder weniger flächige Rechenelemente, insbesondere Rechenbleche. Vorzugsweise können mit dem erfindungsgemäß eingesetzten Stufenrechen Feststoffe mit einem Durchmesser bis zu 5 mm, vorzugsweise bis zu 6 mm aus der Flüssigkeit entfernt werden. Bei dem Stufenrechen handelt es sich dann um einen sogenannten Feinrechen bzw. Feinstrechen. Es liegt im Rahmen der Erfindung, dass der Stufenrechen schräg zur Strömungsrichtung der Flüssigkeit bzw. des Abwassers angeordnet ist und zweckmäßigerweise ist auch die Förderschnecke schräg zu dieser Strömungsrichtung angeordnet.

Es liegt weiterhin im Rahmen der Erfindung, dass der Stufenrechen eine Mehrzahl von nebeneinander und mit Abstand zueinander angeordneten, stufenförmig ausgebildeten Rechenstäben aufweist, wobei ein Teil der Rechenstäbe feststehend ausgebildet ist und über die Breite des Stufenrechens verteilt angeordnet ist und wobei der andere Teil der Rechenstäbe beweglich ausgebildet ist und ebenfalls über die Breite des Stufenrechens verteilt angeordnet ist. Es empfiehlt sich, dass die beweglichen Rechenstäbe von der Rotation der Förderschnecke bzw. von der rotierenden Förderschnecke antreibbar sind, so dass die beweglichen Rechenstäbe auf einer Bewegungsbahn, insbesondere auf einer geschlossenen Bewegungsbahn bewegbar sind. Bei der geschlossenen Bewegungsbahn handelt es sich insbesondere um eine Kreisbahn, eine ovalförmige Bahn bzw. eine ellipsenförmige Bahn. Wenn man einen Punkt eines beweglichen Rechenstabes betrachtet, vollzieht dieser Punkt bei der Bewegung der beweglichen Rechenstäbe eine Bewegung über die geschlossene Bewegungsbahn. Die beweglichen Rechenstäbe werden durch Zwischenschaltung der Übertragungseinrichtung von der rotierenden Förderschnecke angetrieben. Zweckmäßigerweise sind die feststehenden und die beweglichen Rechenstäbe parallel zueinander angeordnet. Vorzugsweise ist jeder zweite Rechenstab als beweglicher Rechenstab ausgebildet. Die Rechenstäbe können mehr oder weniger flächig ausgeführt sein und insbesondere in Form von Rechenblechen vorliegen.

Nach bevorzugter Ausführungsform der Erfindung wird eine stufenförmige Ausbildung der Rechenstäbe dadurch realisiert, dass in Längsrichtung eines Rechenstabes Zacken und Mulden, insbesondere bogenförmig ausgebildete Mulden abwechselnd hintereinander angeordnet sind. Zweckmäßigerweise sind die Mulden kreisbogenförmig ausgebildet. Empfohlenermaßen fluchten in einem Ruhezustand der erfindungsgemäßen Vorrichtung die Zacken sowie die Mulden über die Breite des Stufenrechens miteinander.

Gemäß bevorzugter Ausführungsform der Erfindung weist der Stufenrechen eine Mehrzahl von nebeneinander und mit Abstand zueinander angeordneten stufenförmig ausgebildeten Rechenstäben auf, wobei der Abstand von zwei nebeneinander angeordneten Rechenstäben 1 bis 20 mm, bevorzugt 1 bis 10 mm und sehr bevorzugt 1 bis 6 mm beträgt. Zweckmäßigerweise handelt es sich bei dem Stufenrechen um einen Feinrechen bzw. Feinstrechen. Es liegt im Rahmen der Erfindung, dass alle Rechenstäbe gleiche Abstände zueinander aufweisen.

Eine besonders bevorzugte Ausführungsform der Erfindung ist dadurch gekennzeichnet, dass bewegliche Rechenstäbe bzw. dass alle beweglichen Rechenstäbe zu einem Rechenstabaggregat miteinander verbunden bzw. kombiniert sind, wobei das Rechenstabaggregat von der rotierenden Förderschnecke antreibbar ist, so dass das gesamte Rechenstabaggregat auf der Bewegungsbahn, insbesondere auf der geschlossenen Bewegungsbahn bewegbar ist. Vorzugsweise ist die erfindungsgemäße Vorrichtung so ausgebildet, dass die Übertragungseinrichtung zumindest ein an die Förderschnecke angeschlossenes Getriebe aufweist sowie zumindest einen an das Getriebe angeschlossenen Hebelarm aufweist. Empfohlenermaßen wird durch Rotation bzw. Drehbewegung der Förderschnecke der genannte Hebelarm bewegt bzw. angetrieben, so dass die an den Hebelarm angeschlossenen beweglichen Rechenstäbe bzw. das an den Hebelarm angeschlossene Rechenstabaggregat auf der Bewegungsbahn, insbesondere auf der geschlossenen Bewegungsbahn bewegbar sind/ist. Vorzugsweise wird für die erfindungsgemäße Vorrichtung lediglich ein Getriebe für den Antrieb des zumindest einen Hebelarmes eingesetzt. Die erfindungsgemäße Übertragungseinrichtung, die die Bewegung der Förderschnecke auf den zumindest einen Hebelarm überträgt arbeitet vorzugsweise ohne Antriebsketten oder Antriebsriemen und somit antriebskettenfrei bzw. antriebsriemenfrei.

Zweckmäßigerweise ist der Hebelarm mit seinem einen Ende schwenkbeweglich mit einer Übertragungswelle des Getriebes verbunden und mit seinem anderen Ende schwenkbeweglich an das Rechenstabaggregat angeschlossen. Es liegt dabei im Rahmen der Erfindung, dass das eine Ende des Hebelarmes exzentrisch an die Übertragungswelle des Getriebes angeschlossen ist. Vorzugsweise ist der Hebelarm mit seinem anderen Ende schwenkbeweglich an einem Anschlusszapfen des Rechenstabaggregates angeschlossen, wobei der Anschlusszapfen zweckmäßigerweise fest mit dem Rechenstabaggregat verbunden ist. Empfohlenermaßen ist die Längsachse der Übertragungswelle des Getriebes quer bzw. senkrecht zur Längsachse der Förderschnecke angeordnet. Bei dem Getriebe handelt es sich dann vorzugsweise um ein Winkelgetriebe. Im Rahmen der Erfindung kann beispielsweise ein Kegelradgetriebe eingesetzt werden. Zweckmäßigerweise ist die Längsachse des Hebelarms quer bzw. senkrecht zur Längsachse der Übertragungswelle angeordnet. - Nach einer empfohlenen Ausführungsform der Erfindung weist der Hebelarm einen Führungszapfen auf, der in einem Langloch, insbesondere in einem gehäusefesten Langloch geführt ist. Gehäusefest meint hier, dass das Langloch in einem Gehäuse der erfindungsgemäßen Vorrichtung vorgesehen ist und dass der Hebelarm relativ zu diesem Gehäuse bewegbar ist. Es liegt im Rahmen der Erfindung, dass der in dem Langloch geführte Führungszapfen des Hebelarms zwischen den beiden Enden des Hebelsarms angeordnet ist und zwar zweckmäßigerweise im mittleren Bereich des Hebelarms.

Eine besonders bevorzugte Ausführungsform der Erfindung ist dadurch gekennzeichnet, dass mit dem Getriebe bzw. mit der Übertragungswelle des

Getriebes zwei Hebelarme verbunden sind und dass sich die beiden Hebelarme insbesondere in einem Ruhezustand der Vorrichtung in entgegengesetzte Richtungen erstrecken. Dabei können für jeden dieser beiden Hebelarme die vorstehend zu dem einen Hebelarm beschriebenen Merkmale entweder teilweise oder vollständig realisiert sein. Eine sehr empfohlene Ausführungsform der Erfindung zeichnet sich dadurch aus, dass an zwei gegenüberliegenden Seiten des Getriebes jeweils eine Übertragungswelle angeordnet ist bzw. jeweils ein Übertragungszapfen einer Übertragungswelle angeordnet ist und dass an jede Übertragungswelle bzw. an jeden Übertragungszapfen jeweils zwei Hebelarme schwenkbeweglich angeschlossen sind. Es sind dann also zwei Paare von Hebelarmen vorgesehen und die beiden Hebelarme jedes Hebelarmpaares erstrecken sich zweckmäßigerweise insbesondere in einem Ruhezustand der Vorrichtung in entgegengesetzte Richtungen. Für jeden der vier Hebelarme können im Übrigen die vorstehend zu dem einen Hebelarm beschriebenen Merkmale entweder teilweise oder vollständig verwirklicht sein.

Eine empfohlene Ausführungsform der Erfindung ist dadurch gekennzeichnet, dass das Rechenstabaggregat zwei gegenüberliegende Aggregatwangen - insbesondere zwei U-förmige Aggregatwangen - aufweist, wobei jeweils zwei der vier Hebelarme jeweils mit ihrem einen Ende an einem Ende einer Aggregatwange -insbesondere an einem U-Schenkel einer Aggregatwange - schwenkbeweglich angeschlossen sind. Vorzugsweise sind die beiden Aggregatwangen durch zumindest ein Verbindungsprofil, zweckmäßigerweise durch zumindest zwei Verbindungsprofile miteinander verbunden und die beweglichen Rechenstäbe sind an diesem Verbindungsprofil bzw. an diesen Verbindungsprofilen fixiert. Durch die Rotation der Förderschnecke werden die Hebelarme über das Getriebe angetrieben bzw. bewegt und zwar mit der Maßgabe, dass das Rechenstabaggregat bzw. die darin kombinierten beweglichen Rechenstäbe auf der Bewegungsbahn bzw. geschlossenen Bewegungsbahn bewegbar sind. Durch diese Bewegung der beweglichen Rechenstäbe werden Feststoffe bzw. Feststoffteilchen gleichsam von Stufe zu Stufe des Stufenrechens geschoben und schließlich an die Förderschnecke übergeben.

Der Erfindung liegt die Erkenntnis zugrunde, dass mit der erfindungsgemäßen Vorrichtung eine sehr effiziente und funktionssichere Reinigung von Flüssigkeiten bzw. Abwässern möglich ist. Die erfindungsgemäße Vorrichtung zeichnet sich durch eine äußerst geringe Störanfälligkeit aus und der gemeinsame Antrieb der Komponenten der Vorrichtung kann auf einfache Weise gesteuert werden. Außerdem weist die erfindungsgemäße Vorrichtung in vorteilhafter Weise eine wenig aufwendige, wenig voluminöse und wenig komplexe Bauweise auf. Die erfindungsgemäße Vorrichtung ist auch mit relativ geringen Kosten realisierbar.

Nachfolgend wird die Erfindung anhand einer lediglich ein Ausführungsbeispiel darstellenden Zeichnung näher erläutert. Es zeigen in schematischer Darstellung:
- Fig. 1: eine Seitenansicht der erfindungsgemäßen Vorrichtung,
- Fig. 2: eine perspektivische Ansicht des Stufenrechens der erfindungs-gemäßen Vorrichtung und
- Fig. 3: eine perspektivische Ansicht der erfindungsgemäßen Vorrichtung.

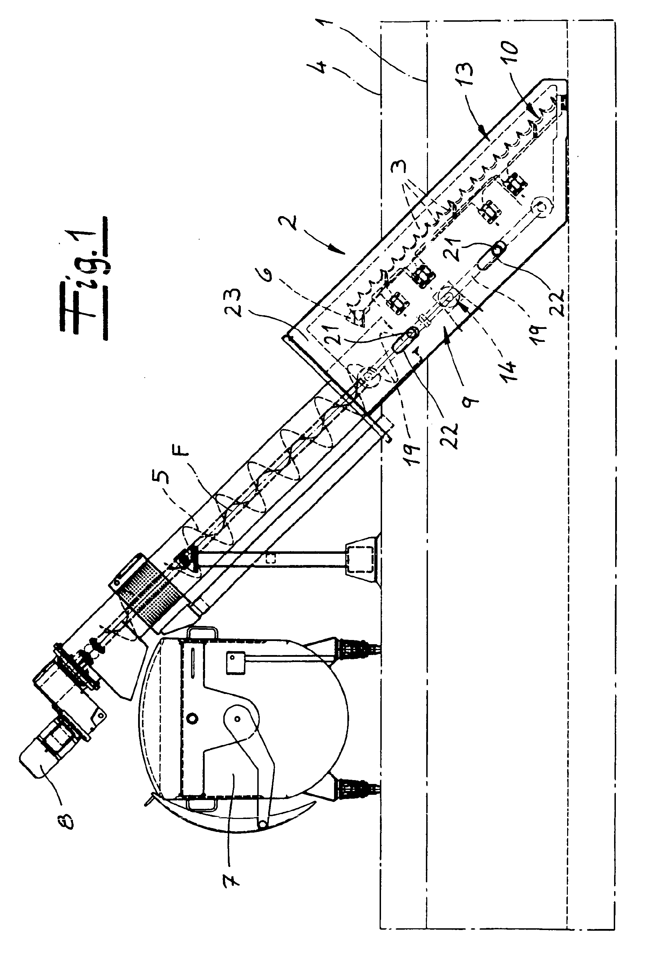

Die Figuren zeigen eine Vorrichtung zum Entfernen von Rechengut aus einer Flüssigkeit, insbesondere aus strömendem Abwasser 1. Die Figur 1 zeigt, dass die erfindungsgemäße Vorrichtung einen Stufenrechen 2 mit einer Mehrzahl von Stufen 3 aufweist, der teilweise in das Abwasser 1 eintaucht. Das Abwasser 1 strömt im Ausführungsbeispiel gemäß Figur 1 durch einen Kanal 4 und der Stufenrechen 2 erstreckt sich vorzugsweise über die gesamte Breite dieses Kanals 4. Zweckmäßigerweise und im Ausführungsbeispiel ist der Stufenrechen 2 schräg zur Strömungsrichtung des Abwassers 1 angeordnet. Das gilt auch für die Förderschnecke 5, die an den Stufenrechen 2 anschließt. Das Rechengut wird mit dem Stufenrechen 2 in Richtung Förderschnecke 5 gefördert und über eine Einwurföffnung 6 an die Förderschnecke 5 übergeben. Das Rechengut wird dann mit der Förderschnecke 5 abgefördert und einem Abfallcontainer 7 zugeführt. Die Förderschnecke 5 wird mit einem Antriebsmotor 8 angetrieben, der zweckmäßigerweise und im Ausführungsbeispiel am Stirnende der Förderschnecke 5 an die Förderschnecke 5 angeschlossen ist. Erfindungsgemäß ist die Förderschnecke 5 mit der Maßgabe an den Stufenrechen 2 angeschlossen, dass mittels der Rotation der Förderschnecke 5 und mit Hilfe einer Übertragungseinrichtung 9 der Stufenrechen 2 antreibbar ist. Der Stufenrechen 2 wird also ebenfalls mit Hilfe des Antriebsmotors 8 angetrieben.

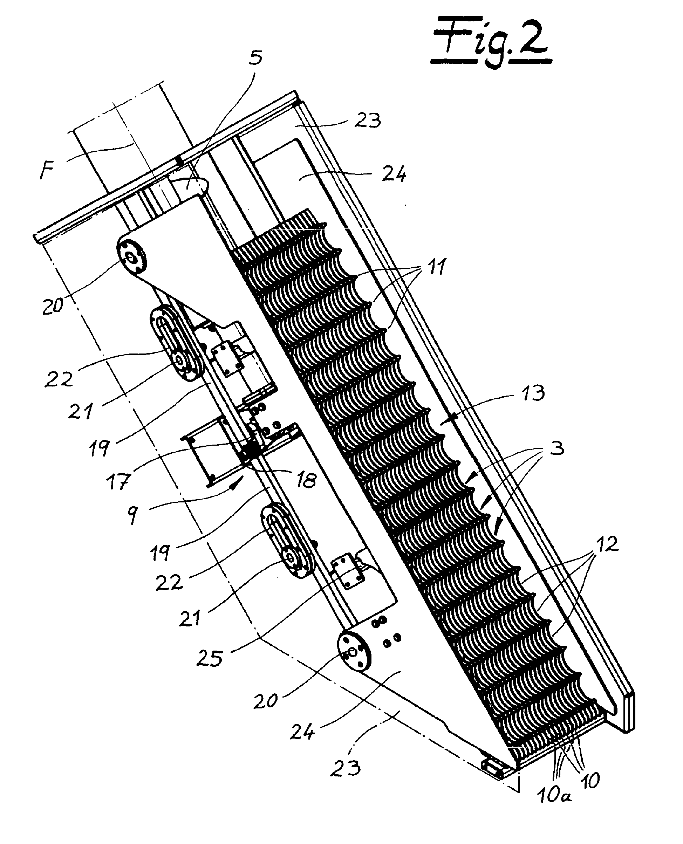

Insbesondere der Figur 2 ist entnehmbar, dass der Stufenrechen 2 eine Mehrzahl von nebeneinander und mit Abstand zueinander angeordneten stufenförmig ausgebildeten Rechenstäben 10 aufweist. Die Rechenstäbe 10 sind vorzugsweise und im Ausführungsbeispiel als Zackenbleche ausgebildet. Diese Rechenstäbe 10 sind parallel zueinander angeordnet und mögen im Ausführungsbeispiel einen gegenseitigen Abstand von 6 mm aufweisen. Insoweit handelt es sich bei dem eingesetzten Stufenrechen 2 um einen Feinrechen bzw. Feinstrechen. Im Ausführungsbeispiel ist die Hälfte der Rechenstäbe 10 feststehend ausgebildet und die andere Hälfte der Rechenstäbe 10 beweglich ausgebildet. Zweckmäßigerweise ist jeder zweite Rechenstab 10 beweglich ausgeführt. Die beweglichen Rechenstäbe 10a werden unter Zwischenschaltung der weiter unten noch näher erläuterten Übertragungseinrichtung 9 von der rotierenden Förderschnecke 5 angetrieben. Dabei werden die beweglichen Rechenstäbe 10a auf einer geschlossenen Bewegungsbahn bewegt, bei der es sich insbesondere um eine Kreisbahn handelt. Durch diese Bewegung der beweglichen Rechenstäbe 10a werden Feststoffteilchen in an sich bekannter Weise von Stufe 3 zu Stufe 3 des Stufenrechens 2 nach oben zur Förderschnecke 5 hin verschoben. - Die stufenförmige Ausbildung der Rechenstäbe 10 ist im Ausführungsbeispiel im Übrigen dadurch realisiert, dass in Längsrichtung eines Rechenstabes 10 Zacken 11 und bogenförmige bzw. kreisbogenförmig ausgebildete Mulden 12 abwechselnd hintereinander angeordnet sind. In der Figur 2 ist erkennbar, dass in einer Ruheposition der erfindungsgemäßen Vorrichtung die Zacken 11 und die Mulden 12 bezüglich der Breite des Stufenrechens 2 miteinander fluchten.

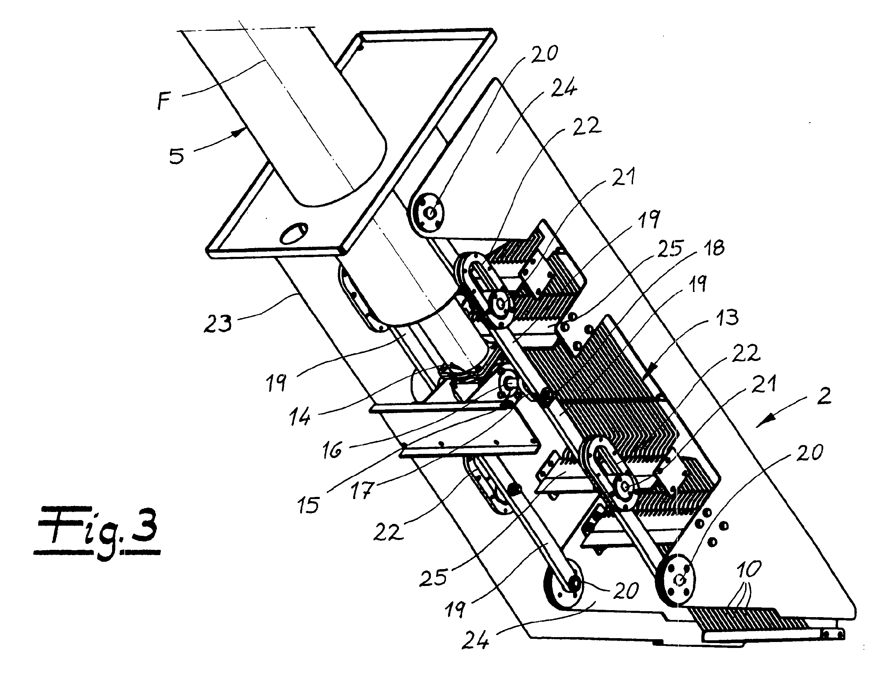

Insbesondere der Figur 3 ist entnehmbar, dass bevorzugt und im Ausführungsbeispiel die beweglichen Rechenstäbe 10a zu einem Rechenstabaggregat 13 kombiniert bzw. miteinander verbunden sind. Dieses Rechenstabaggregat 13 wird von der rotierenden Förderschnecke 5 angetrieben, so dass das gesamte Rechenstabaggregat 13 auf der genannten geschlossenen Bewegungsbahn bzw. Kreisbahn bewegbar ist.

Die Übertragungseinrichtung 9 weist im Ausführungsbeispiel ein an die Förderschnecke 5 angeschlossenes Getriebe bzw. Winkelgetriebe 14 auf. Dieses Winkelgetriebe 14 ist mit einer Übertragungswelle 15 ausgestattet, die an gegenüberliegenden Seiten des Winkelgetriebes 14 mit jeweils einem Übertragungszapfen 16 aus dem Getriebegehäuse herausragt. In der Figur 3 ist lediglich einer dieser Übertragungszapfen 16 sichtbar. Die Übertragungswelle 15 bzw. die Übertragungszapfen 16 sind senkrecht zur Längsachse F der Förderschnecke 5 angeordnet. Durch Rotation der Förderschnecke 5 wird mittels des Winkelgetriebes 14 die Übertragungswelle 15 in Rotation versetzt.

An jeden Übertragungszapfen 16 sind im Ausführungsbeispiel (s. insbesondere Figur 3) zwei Hebelarme 19 exzentrisch und schwenkbeweglich angeschlossen. Jeder Übertragungszapfen 16 ist hierzu über einen Exzenterhebel 17 und einen Zapfen 18 mit den beiden Hebelarmen 19 verbunden. Durch Rotation der Übertragungswelle 15 werden die vier Hebelarme 19 in entsprechende Bewegung versetzt. Jeder Hebelarm 19 ist mit seinem einen Ende schwenkbeweglich an dem Zapfen 18 angeschlossen und mit seinem anderen Ende schwenkbeweglich an einem Anschlusszapfen 20 des Rechenstabaggregates 13 angeschlossen.

Jeder Hebelarm 19 weist im Übrigen einen Führungszapfen 21 auf, der in einem gehäusefesten Langloch 22 geführt ist. Die Langlöcher 22 sind in einem Gehäuse 23 vorgesehen und die Hebelarme 19 sind relativ zu den Langlöchern 22 bzw. zu dem Gehäuse 23 bewegbar. In dem in den Figuren dargestellten Ruhezustand der erfindungsgemäßen Vorrichtung weisen die beiden jeweils mit einem Übertragungszapfen 16 verbundenen Hebelarme 19 in entgegengesetzte Richtungen.

Das Rechenstabaggregat 13 weist vorzugsweise und im Ausführungsbeispiel zwei gegenüberliegende U-förmige Aggregatwangen 24 auf. Jeder Hebelarm 19 ist mit einem Ende schwenkbeweglich mit dem zugeordneten Anschlusszapfen 20 verbunden, der an einem U-Schenkel der zugeordneten Aggregatwange 24 fixiert ist. Die beiden Aggregatwangen 24 des Rechenstabaggregates 13 sind im Ausführungsbeispiel über zwei Verbindungsprofile 25 miteinander verbunden. Die beweglichen Rechenstäbe 10a sind an diesen Verbindungsprofilen 25 fixiert.

Bei Rotation der Förderschnecke 5 wird die Übertragungswelle 15 in Rotation versetzt und überträgt eine entsprechende Bewegung auf die Hebelarme 19.

Dadurch wird das daran schwenkbeweglich angeschlossene Rechenstabaggregat 13 auf der geschlossenen Bewegungsbahn bzw. Kreisbahn bewegt. Somit vollziehen auch die an dem Rechenstabaggregat 13 fixierten beweglichen Rechenstäbe 10a diese Bewegung und als Resultat werden Feststoffteilchen von Stufe zu Stufe 3 des Stufenrechens 2 in Richtung Förderschnecke 5 geschoben bzw. bewegt.

## Patentansprüche

1. Vorrichtung zum Entfernen von Rechengut aus einer Flüssigkeit, insbesondere aus strömendem Abwasser (1), wobei ein zumindest teilweise in die Flüssigkeit eintauchender Stufenrechen (2) mit einer Mehrzahl von Stufen (3) vorgesehen ist, **dadurch gekennzeichnet, dass** an den Stufenrechen (2) eine Förderschnecke (5) anschließt bzw. angeschlossen ist,
dass das Rechengut mit dem Stufenrechen (2) in Richtung Förderschnecke (5) förderbar ist, an die Förderschnecke (5) übergeben wird sowie mit der Förderschnecke (5) abförderbar ist, wobei die Förderschnecke (5) mit zumindest einem Antriebsmotor (8) rotierend antreibbar ist
und dass die Förderschnecke (5) mit der Maßgabe an den Stufenrechen (2) angeschlossen ist, dass mittels der Rotation der Förderschnecke (5) und mit Hilfe zumindest einer Übertragungseinrichtung (9) der Stufenrechen (2) antreibbar ist.

2. Vorrichtung nach Anspruch 1, wobei der Stufenrechen (2) eine Mehrzahl von nebeneinander und mit Abstand zueinander angeordneten stufenförmig ausgebildeten Rechenstäben (10) aufweist, wobei ein Teil der Rechenstäbe (10) feststehend ausgebildet ist, wobei der andere Teil der Rechenstäbe (10) beweglich ausgebildet ist und wobei die beweglichen Rechenstäbe (10a) von der rotierenden Förderschnecke (5) antreibbar sind, so dass die beweglichen Rechenstäbe (10a) auf einer Bewegungsbahn, insbesondere auf einer geschlossenen Bewegungsbahn bewegbar sind.

3. Vorrichtung nach Anspruch 2, wobei die stufenförmige Ausbildung der Rechenstäbe (10) dadurch realisiert ist, dass in Längsrichtung eines Rechenstabes (10) Zacken (11) und Mulden (12), insbesondere bogenförmig ausgebildete Mulden (12) abwechselnd hintereinander angeordnet sind.

4. Vorrichtung nach einem der Ansprüche 1 bis 3, wobei der Stufenrechen (2) eine Mehrzahl von nebeneinander und mit Abstand zueinander angeordneten Rechenstäben (10) aufweist, wobei der Abstand von zwei nebeneinander angeordneten Rechenstäben (10) 1 bis 20 mm beträgt, bevorzugt 1 bis 10 mm und sehr bevorzugt 1 bis 6 mm beträgt.

5. Vorrichtung nach einem der Ansprüche 2 bis 4, wobei bewegliche Rechenstäbe (10a) zu einem Rechenstabaggregat (13) miteinander verbunden sind, wobei das Rechenstabaggregat (13) von der rotierenden Förderschnecke (5) antreibbar ist, so dass das Rechenstabaggregat (13) auf einer Bewegungsbahn, insbesondere auf einer geschlossenen Bewegungsbahn bewegbar ist.

6. Vorrichtung nach einem der Ansprüche 1 bis 5, wobei die Übertragungseinrichtung (9) zumindest ein an die Förderschnecke (5) angeschlossenes Getriebe aufweist sowie zumindest einen an das Getriebe angeschlossenen Hebelarm (19) aufweist, wobei durch Rotation der Förderschnecke (5) der Hebelarm (19) bewegt bzw. angetrieben wird, so dass die an den Hebelarm (19) angeschlossenen beweglichen Rechenstäbe (10a) bzw. das an den Hebelarm (19) angeschlossene Rechenstabaggregat (13) auf der Bewegungsbahn, insbesondere auf der geschlossenen Bewegungsbahn bewegbar sind/ist.

7. Vorrichtung nach Anspruch 6, wobei der zumindest eine Hebelarm (19) mit seinem einen Ende schwenkbeweglich mit einer Übertragungswelle (15) des Getriebes verbunden ist und mit seinem anderen Ende schwenkbeweglich an das Rechenstabaggregat (13) angeschlossen ist.

8. Vorrichtung nach Anspruch 7, wobei die Längsachse der Übertragungswelle (15) quer bzw. senkrecht zur Längsachse (F) der Förderschnecke (5) angeordnet ist.

9. Vorrichtung nach einem der Ansprüche 6 bis 8, wobei der Hebelarm (19) einen Führungszapfen (21) aufweist, der in einem Langloch (22), insbesondere in einem gehäusefesten Langloch (22) geführt ist.

10. Vorrichtung nach einem der Ansprüche 6 bis 9, wobei mit dem Getriebe bzw. mit der Übertragungswelle (15) des Getriebes zumindest zwei Hebelarme (19) verbunden sind und wobei sich die beiden Hebelarme (19) in entgegengesetzte Richtungen erstrecken.

11. Vorrichtung nach einem der Ansprüche 6 bis 10, wobei an zwei gegenüberliegenden Seiten des Getriebes jeweils eine Übertragungswelle (16) angeordnet ist bzw. jeweils ein Übertragungszapfen (16) einer Übertragungswelle (15) angeordnet ist und wobei an jede Übertragungswelle (15) bzw. an jeden Übertragungszapfen (16) jeweils zwei Hebelarme (19) schwenkbeweglich angeschlossen sind.

12. Vorrichtung nach Anspruch 11, wobei das Rechenstabaggregat (13) zwei gegenüberliegende Aggregatwangen (24) aufweist, wobei die Hebelarme (19) jeweils mit ihrem einen Ende an einem Ende einer Aggregatwange (24) schwenkbeweglich angeschlossen sind, wobei die beiden Aggregatwangen (24) durch zumindest ein Verbindungsprofil (25) miteinander verbunden sind und wobei die beweglichen Rechenstäbe (10a) an diesem Verbindungsprofil (25) fixiert sind.

## Claims

1. A device for removing screenings from a liquid, in particular from running waste water (1), whereby a step screen (2) with multiple steps (3) that is at least partially immersed in the liquid, is provided, **characterised by** the fact
that a screw conveyor (5) attaches to or is connected to the step screen (2);
that the screenings can be conveyed by the step screen (2) towards the screw conveyor (5), be passed on to the screw conveyor (5) and be discharged by the screw conveyor (5), with the screw conveyor (5) being activated into rotation by at least one drive motor (8) ;
that the screw conveyor (5) is connected to the step screen (2) with the proviso that the step screen (2) can be driven by the rotation of the screw conveyor (5) assisted by at least one transmission device (9).

2. A device according to claim 1 where the step screen (2) features a multiple of screening bars (10) arranged interspaced next to one another in steps, where some of the screening bars (10) are fixed and where the other screening bars (10) are movable, whereby the movable screening bars (10a) can be driven by the rotating screw conveyor (5) so that the movable screening bars (10a) can be moved along a path of motion, in particular an enclosed path of motion.

3. A device according to claim 2, where the stepped design of the screening bars (10) is realised by alternating prongs (11) and troughs (12), in particular arc-shaped troughs, following one another in longitudinal direction of a screening bar (10).

4. A device according to one of the claims 1 to 3 where the step screen (2) features a multiple of screening bars (10) arranged next to one another and interspaced, where the space between adjacent screening bars (10) is 1 to 20mm, preferably 1 to 10mm and most preferably 1 to 6mm.

5. A device according to one of the claims 2 to 4 where the movable screening bars (10a) are interlinked to form a screening bar unit (13), where the said screening bar unit (13) can be driven by the rotating screw conveyor (5) so that the said screening bar unit (13) can move along a path of motion, in particular an enclosed path of motion.

6. A device according to one of the claims 1 to 5 where the transmission device (9) features at least one gearbox connected to the screw conveyor (5) and at least one lever arm (19) connected to the gearbox, whereby the lever arm (19) is moved or driven by the rotation of the screw conveyor (5), so that the movable screening bars (10a), i.e. the screening bar unit (13) connected to the lever (19), are/is movable along a path of motion, in particular an enclosed path of motion.

7. A device according to claim 6, where the minimum of one lever arm (19) is at one end in pivotal connection with a transmission shaft (15) of the gearbox and at the other end is in pivotal connection with the screening bar unit (13).

8. A device according to claim 7, where the longitudinal axis of the transmission shaft (15) is arranged at right angle, i.e. vertical to the longitudinal axis (F) of the screw conveyor (5).

9. A device according to one of the claims 6 to 8, where the lever arm (19) features a pilot pin (21) which is guided in an slot (22), in particular in a strengthened slot (22).

10. A device according to one of the claims 6 to 9 where a minimum of two lever arms (19) are attached to the gearbox, i.e. to the transmission shaft (15) of the gearbox with the two lever arms (19) extending in opposite directions.

11. A device according to one of the claims 6 to 10 where to each of two opposite sides of the gearbox a transmission shaft (15), i.e. the transmission pin (16) of a transmission shaft (15), is fitted and where two lever arms (19) are attached in a pivotal manner to each transmission shaft (15), i.e. to each transmission pin (16) of the transmission shaft (15).

12. A device according to claim 11 where the screening bar unit (13) features two unit cheeks (24) arranged on opposite sides, where each lever arm (19) is at one end attached in a pivotal manner to one end of a unit cheek (24), where the two unit cheeks (24) are interlinked by at least one connecting profile (25) and where the movable screening bars (10a) are fitted to the said connecting profile (25).

## Revendications

1. Dispositif pour l'élimination de râtelures dans un liquide, en particulier une eau usée en écoulement (1), dans lequel un peigne en gradins (2) plongé au moins partiellement dans le liquide est pourvu d'une pluralité de gradins (3), **caractérisé en ce qu'**une vis transporteuse (5) est connectée ou reliée au peigne en gradins (2),
**en ce que** les râtelures peuvent être transportées en direction de la vis transporteuse (5) avec le peigne en gradins (2), sont livrées à la vis transporteuse (5) et peuvent être évacuées avec la vis transporteuse (5), la vis transporteuse (5) pouvant être actionnée avec au moins un moteur d'entraînement (8),
et **en ce que** la vis transporteuse (5) est reliée au peigne en gradins (2) de manière à pouvoir actionner le peigne en gradins (2) au moyen de la rotation de la vis transporteuse (5) et à l'aide d'au moins un dispositif de transmission (9).

2. Dispositif selon la revendication 1, dans lequel le peigne en gradins (2) comporte une pluralité de tiges de peigne (10) conçues en forme de gradins et disposées côte à côte de façon espacée, dans lequel une partie des tiges de peigne (10) est conçue fixe et l'autre partie des tiges de peigne (10) est conçue mobile, et dans lequel les tiges de peigne mobiles (10a) peuvent être actionnées par la vis transporteuse (5) en rotation, de manière à ce que les tiges de peigne (10) mobiles (10a) puissent être déplacées sur une voie de déplacement, en particulier sur une voie de déplacement fermée.

3. Dispositif selon la revendication 2, dans lequel la conception en gradins des tiges de peigne (10) est réalisée en agençant des pointes (11) et des cavités (12) en alternance les unes à la suite des autres, en particulier des cavités (12) conçues en forme d'arc, dans le sens longitudinal d'une tige de peigne (10).

4. Dispositif selon l'une des revendications 1 à 3, dans lequel le peigne en gradins (2) comporte une pluralité de tiges de peigne (10) disposées côte à côte de façon espacée, l'espacement entre deux tiges de peigne (10) adjacentes mesurant de 1 à 20 mm, de préférence de 1 à 10 mm et mieux, de 1 à 6 mm.

5. Dispositif selon l'une des revendications 2 à 4, dans lequel des tiges de peigne mobiles (10a) sont reliées entre elles en un agrégat de tiges de peigne (13), dans lequel l'agrégat de tiges de peigne (13) peut être actionné par la vis transporteuse (5) en rotation, de manière à ce que l'agrégat de tiges de peigne (13) puisse être déplacé sur une voie de déplacement, en particulier sur une voie de déplacement fermée.

6. Dispositif selon l'une des revendications 1 à 5, dans lequel le dispositif de transmission (9) comporte au moins un engrenage raccordé à la vis transporteuse (5), ainsi qu'au moins un bras de levier (19) raccordé à l'engrenage, dans lequel la rotation de la vis transporteuse (5) permet de déplacer ou d'actionner le bras de levier (19), de manière à ce que les tiges de peigne mobiles (10a) raccordées au bras de levier (19) ou l'agrégat de tiges de peigne (13) raccordé au bras de levier (19) puissent/puisse être déplacé(s) sur la voie de déplacement, en particulier sur la voie de déplacement fermée.

7. Dispositif selon la revendication 6, dans lequel l'au moins un bras de levier (19) est relié de façon pivotante à un arbre de transmission (15) de l'engrenage par l'une de ses extrémités et raccordé de façon pivotante à l'agrégat de tiges de peigne (13) par l'autre de ses extrémités.

8. Dispositif selon la revendication 7, dans lequel l'axe longitudinal de l'arbre de transmission (15) est agencé transversalement ou perpendiculairement à l'axe longitudinal (F) de la vis transporteuse (5).

9. Dispositif selon l'une des revendications 6 à 8, dans lequel le bras de levier (19) comporte un tourillon de guidage (21) guidé dans un trou oblong (22), en particulier dans un trou oblong fixe dans le boîtier.

10. Dispositif selon l'une des revendications 6 à 9, dans lequel au moins deux bras de levier (19) sont reliés à l'engrenage ou à l'arbre de transmission (15) de l'engrenage, et dans lequel les deux bras de levier (19) s'étendent dans des directions opposées.

11. Dispositif selon l'une des revendications 6 à 10, dans lequel un arbre de transmission (16) ou un tourillon de transmission (16) d'un arbre de transmission (15) est agencé respectivement de deux côtés opposés de l'engrenage, et dans lequel deux bras de levier (19) sont respectivement raccordés de façon pivotante à chaque arbre de transmission (15) ou à chaque tourillon de transmission (16).

12. Dispositif selon la revendication 11, dans lequel l'agrégat de tiges de peigne (13) comporte deux joues d'agrégat opposées (24), dans lequel les bras de levier (19) sont reliés respectivement à une extrémité d'une joue d'agrégat (24) par l'une de leurs extrémités, dans lequel les deux joues d'agrégat (24) sont reliées entre elles par au moins un profil d'assemblage (25), et dans lequel les tiges de peigne mobiles (10a) sont fixées à ce profil d'assemblage (25).
